(19) Europäisches Patentamt
European Patent Office
Office européen des brevets

(11) Veröffentlichungsnummer: **0 471 962 B1**

(12) # EUROPÄISCHE PATENTSCHRIFT

(45) Veröffentlichungstag der Patentschrift: **31.08.94**

(51) Int. Cl.$^5$: **C09D 5/03**, C09D 201/06, C08F 222/06

(21) Anmeldenummer: **91111171.4**

(22) Anmeldetag: **05.07.91**

(54) **Verwendung von Hydroxyl- und Carbonsäureanhydridgruppen enthaltenden Copolymerisaten als Bindemittel für Pulverlacke.**

(30) Priorität: **18.07.90 DE 4022750**

(43) Veröffentlichungstag der Anmeldung:
**26.02.92 Patentblatt 92/09**

(45) Bekanntmachung des Hinweises auf die Patenterteilung:
**31.08.94 Patentblatt 94/35**

(84) Benannte Vertragsstaaten:
**AT BE CH DE ES FR GB IT LI NL SE**

(56) Entgegenhaltungen:
**US-A- 4 211 691**

**DATABASE WPIL, NR. 88-123 693, DERWENT PUBLICATIONS LTD., London, GB; & JP-A-63 068 610**

(73) Patentinhaber: **BAYER AG**

**D-51368 Leverkusen (DE)**

(72) Erfinder: **Wamprecht, Christian, Dr.**
**Regattastrasse 20**
**W-4040 Neuss 22 (DE)**
Erfinder: **Kreuder, Hans-Joachim, Dr.**
**Auf Rothenfeld 23a**
**W-4154 Tönisvorst 2 (DE)**
Erfinder: **Zenner, Armin, Dr.**
**Goethestrasse 65**
**W-4047 Dormagen (DE)**
Erfinder: **Klussmann, Henning**
**Lindenstrasse 57**
**W-4049 Rommerskirchen 1 (DE)**

**EP 0 471 962 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Verwendung von selbstvernetzenden Copolymerisaten olefinisch ungesättigter Verbindungen, die unterhalb 30 °C fest sind und einen bestimmten Gehalt sowohl an eingebauten Hydroxylgruppen als auch an eingebauten intramolekularen Carbonsäureanhydridgruppen aufweisen, als Bindemittel für Pulverlacke.

Die Verwendung von Kombinationen aus organischen Verbindungen mit mindestens zwei intramolekularen Carbonsäureanhydridgruppen pro Molekül, insbesondere von bernsteinsäureanhydridhaltigen Copolymerisaten und Polyhydroxylverbindungen, gegebenenfalls in Kombination mit Katalysatoren, als Bindemittel für Pulverlacke ist bereits bekannt.

Die DE-OS 22 14 450 beschreibt Beschichtungskompositionen, bestehend aus A) Ethylen-Maleinsäureanhydrid-Copolymeren in Pulverform und B) Polyolen, die mindestens eine Amino- oder Amidgruppe enthalten, als Vernetzersubstanzen. Dabei können neben den Ethylen-Maleinsäureanhydrid-Copolymeren auch ternäre Copolymere, die geringe Mengen (<10 %) eines anderen Olefin-, Vinyl-oder Acrylmonomers einpolymerisiert enthalten, verwendet werden. Über Copolymere, die neben Anhydrid- auch Hydroxylgruppen enthalten, wird nicht berichtet.

Die EP-A 0 209 377 beschreibt Pulverbeschichtungskompositionen, enthaltend A) eine Komponente mit Carbonsäure- oder Carbonsäureanhydridgruppen, vorzugsweise ein Polymer mit mindestens zwei cyclischen Carbonsäureanhydridgruppen pro Molekül und B) eine Komponente, die pro Molekül zwei Hydroxyl- und mindestens eine Aminogruppe zur Katalyse der Reaktion zwischen Anhydrid- und Hydroxylgruppen enthält. Auch hier wird über Copolymere, die neben Anhydrid- noch Hydroxylgruppen enthalten, nicht berichtet.

Jetzt wurde überraschend gefunden, daß auch Copolymerisate olefinisch ungesättigter Verbindungen, die sowohl eingebaute Hydroxylgruppen als auch eingebaute intramolekulare Carbonsäureanhydridgruppen im gleichen Molekül enthalten, ausgezeichnete Bindemittel für Pulverlacke darstellen, sofern sie den diesbezüglichen Anforderungen bezüglich des Erweichungspunktes bzw. -bereichs genügen. Der Vorteil der Verwendung derartiger Copolymerisate als Bindemittel für Pulverlacke gegenüber der Verwendung der genannten Kombinationen gemäß Stand der Technik liegt auf der Hand: Unverträglichkeiten zwischen einzelnen Bindemittelkomponenten, die oftmals für schlechten Verlauf, ungenügende Fülle und zu geringe Glanzwerte verantwortlich sind, können nicht auftreten.

Gegenstand der Erfindung ist die Verwendung von pulverförmigen Copolymerisaten olefinisch ungesättigter Verbindungen mit einem Erweichungspunkt oder - bereich innerhalb des Bereichs von 30 bis 150 °C, einem als Gewichtsmittel bestimmten Molekulargewicht von 1500 bis 75 000, einem Gehalt an freien Hydroxylgruppen von 0,2 bis 6,0 Gew.-% und einem Gehalt an intramolekularen Carbonsäureanhydridgruppen (berechnet als $C_4H_2O_3$) von 1 bis 30 Gew.-% als Bindemittel oder Bindemittelkomponente in Pulverlacken

Die eigene ältere deutsche Patentanmeldung P 39 12 828.8 befaßt sich zwar bereits mit Copolymerisaten, die sowohl freie Hydroxylgruppen als auch intramolekulare Carbonsäureanhydridgruppen in chemisch eingebauter Form enthalten, jedoch werden die Copolymerisate gemäß dieser älteren Anmeldung ausschließlich als Bindemittel für lösungsmittelhaltige Lacke eingesetzt. Irgendwelche Hinweise auf die Verwendbarkeit derartiger oder ähnlicher Copolymerisate als Bindemittel für Pulverlacke werden in der älteren Anmeldung nicht gegeben.

Die erfindungsgemäß zu verwendenden Copolymerisate weisen ein, nach der Methode der Gelpermeationschromatographie bestimmbares, Molekulargewicht (Gewichtsmittel, Eichung Polystyrol) von 1500 bis 75 000, vorzugsweise 2000 bis 60 000 und besonders bevorzugt 3000 bis 40 000, auf. In den Copolymerisaten liegen sowohl chemisch eingebaute, freie Hydroxylgruppen in einer Menge von 0,2 bis 6,0 Gew.-%, vorzugsweise 0,4 bis 4 Gew.-%, als auch chemisch eingebaute, intramolekulare, cyclische Carbonsäureanhydridgruppen der Formeln

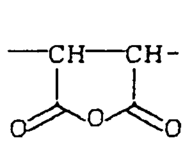 und/oder 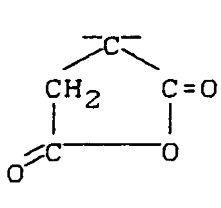

in einer Menge von 1 bis 30 Gew.-%, vorzugsweise 2 bis 25 Gew.-% vor. Besonders bevorzugt liegen in den Copolymerisaten pro Säureanhydridgruppe 0,2 bis 8, vorzugsweise 0,4 bis 4 und insbesondere 0,8 bis 2, Hydroxylgruppen vor.

Zur Herstellung dieser Copolymerisate kommen drei Gruppen von olefinisch ungesättigten Monomeren zum Einsatz und zwar

a) Hydroxylgruppen enthaltende, olefinisch ungesättigte Monomere,

b) intramolekulare Carbonsäureanhydridgruppen enthaltende, olefinisch ungesättigte Monomere und

c) Hydroxyl- und Carbonsäureanhydridgruppen-freie, nichtfunktionelle, olefinisch ungesättigte Monomere.

Die Monomere a) werden im allgemeinen in einer Menge von 1 bis 50, vorzugsweise 2 bis 40 Gew.-Teilen, die Monomeren b) in einer Menge von 1 bis 30, vorzugsweise 2 bis 25 Gew.-Teilen, und die Monomeren c) in einer Menge von 20 bis 98, vorzugsweise 35 bis 96 Gew.-Teilen, eingesetzt, wobei außerdem zu berücksichtigen ist, daß die Anteile der einzelnen Monomeren in dem der Copolymerisation zuzuführenden Gemisch so bemessen werden, daß in den Copolymerisaten die obengenannten Mengen an chemisch eingebauten Hydroxyl- und Säureanhydridgruppen vorliegen. Der Gehalt der Copolymerisate an diesen Gruppierungen entspricht dem Gehalt des Monomergemischs an den gleichen Gruppen, da davon ausgegangen werden kann, daß die Copolymerisate bezüglich ihrer chemischen Zusammensetzung der chemischen Zusammensetzung des Monomergemischs entsprechen.

Das Gelingen der Herstellung solcher Copolymerisate mit sowohl chemisch eingebauten Hydroxyl- als auch Carbonsäureanhydridgruppen durch radikalische Lösungspolymerisation und die Gewinnung der Pulverlackbindemittel daraus durch anschließende vollständige Entfernung des Lösungsmittels durch destillative Ausdampfung in speziellen Extrudern, oder auch durch Sprühtrocknung gegebenenfalls im Vakuum, war keineswegs vorhersehbar, weil Säureanhydridgruppen bei höheren Temperaturen gegenüber Hydroxylgruppen reaktionsfähig sind. Trotzdem lassen sich diese Copolymerisate in organischen Lösungsmitteln durch radikalische Copolymerisation herstellen und durch destillative Ausdampfung in speziellen Extrudern oder auch durch Sprühtrocknung, gegebenenfalls im Vakuum, vollständig vom Lösungsmittel befreien.

Bei den Monomeren a) handelt es sich um einfach olefinisch ungesättigte Alkohole, die vorzugsweise ein Molekulargewicht von 58 bis 500 und vorzugsweise aliphatisch gebundene Hydroxylgruppen aufweisen. Gut geeignet sind beispielsweise übliche Hydroxyalkylester der Acryl- und Methacrylsäure wie z.B. Hydroxyethyl(meth)acrylat, Hydroxypropyl(meth)acrylat, 4-Hydroxybutyl(meth)acrylat, Hydroxyalkylvinylether wie z.B. Hydroxyethylvinylether oder Hydroxybutylvinylether, Allylalkohol, Hydroxyderivate des (Meth)-acrylamids wie z.B. N-(3-Hydroxy-2,2-dimethylpropyl)-(meth)acrylamid; Umsetzungsprodukte von Glycidyl-(meth)acrylat mit Monocarbonsäuren, Umsetzungsprodukte von (Meth)acrylsäure mit Monoepoxidverbindungen, sowie Umsetzungsprodukte der zuvor genannten OH-funktionellen, olefinisch ungesättigten Verbindungen mit $\epsilon$-Caprolacton oder Butyrolacton.

Typische Beispiele für Monomere b) sind z.B. Itaconsäureanhydrid oder Maleinsäureanhydrid, wobei Maleinsäureanhydrid bevorzugt ist.

Die Monomeren c) weisen im allgemeinen ein Molekulargewicht von 86 bis 400 auf. Es handelt sich um die üblichen Hydroxylgruppen- und Säureanhydridgruppen-freien, vorzugsweise einfach olefinisch ungesättigten Monomeren, wie sie auch bereits bei den Verfahren des obengenannten Standes der Technik als Monomere eingesetzt worden sind. Typische Beispiele sind Ester der Acryl- und Methacrylsäure, wie beispielsweise Methylacrylat, Ethylacrylat, n-Butylacrylat, Isobutylacrylat, tert.-Butylacrylat, 2-Ethylhexylacrylat, Cyclohexylmethacrylat, Methylmethacrylat, n-Butylmethacrylat, Isobutylmethacrylat oder 2-Ethylhexylmethacrylat, Vinylaromaten wie beispielsweise Styrol, Vinyltoluol, $\alpha$-Methylstyrol, $\alpha$-Ethylstyrol, kernsubstituierte, gegebenenfalls Isomerengemische darstellende Diethylstyrole, Isopropylstyrole, Butylstyrole und Methoxystyrole, Vinylether wie beispielsweise Ethylvinylether, n-Propylvinylether, Isopropylvinylether, n-Butylvinylether und Isobutylvinylether, Vinylester wie beispielsweise Vinylacetat, Vinylpropionat und Vinylbutyrat.

Bei der Durchführung der Copolymerisation können selbstverständlich jeweils beliebige Gemische der beispielhaft genannten Monomeren a) bis c) verwendet werden, mit der Maßgabe, daß diese Auswahl der bei der Herstellung der Copolymerisate eingesetzten Monomere so erfolgt, daß die resultierenden Copolymerisate unterhalb 30 °C, vorzugsweise unterhalb 40 °C fest sind und bei Temperaturen von oberhalb 150 °C Flüssigkeiten darstellen. Diese Bedingungen besagen, daß die Copolymerisate einen mittels der Differentialthermoanalyse (DTA) bestimmten Erweichungspunkt bzw. -bereich innerhalb des Bereichs von 30 bis 150, vorzugsweise 40 bis 120 °C aufweisen. Diese für die erfindungsgemäße Verwendbarkeit der Copolymerisate wesentliche Bedingung wird dann erfüllt, wenn bei der Herstellung der Copolymerisate ein geeignetes Verhältnis von "weichmachenden" Monomeren, die zur Erniedrigung der Erweichungstemperatur der Copolymeren führen zu "hartmachenden" Monomeren, die zur Erhöhung der Erweichungstemperatur des Copolymeren führen, zur Anwendung gelangt. "Weichmachende" Monomere sind beispielsweise

Alkylester der Acrylsäure wie z.B. Methylacrylat, Ethylacrylat, Butylacrylat, Isobutylacrylat, 2-Ethylhexylacrylat, Laurylacrylat, Ethyldiglykolacrylat; Vinylester wie z.B. Vinylpropionat; Vinylether wie z.B. Vinylmethylether, Vinylethylether, Vinylpropylether, Vinylisobutylether, Vinyloctadecylether, Vinylcyclohexylether.

"Hartmachende" Monomere sind beispielsweise Alkylester der Methacrylsäure wie z.B. Methylmethacrylat, Ethylmethacrylat, Isobutylmethacrylat, Cyclohexylmethacrylat, 2-Phenylethylmethacrylat, Tetrahydrofurfurylmethacrylat, Isopropylmethacrylat, tert.-Butylmethacrylat, Neopentylmethacrylat, Isobornylmethacrylat, Benzylmethacrylat; Vinylaromaten wie z.B. Styrol, Vinyltoluol, α-Methylstyrol, α-Ethylstyrol; heterocyclische Vinylverbindungen wie z.B. Vinylpyrrolidon, Vinylcaprolactam oder Vinylcarbazol.

Die Herstellung der Copolymerisate kann durch Copolymerisation der beispielhaft genannten Monomeren a) bis c) nach üblichen radikalischen Polymerisationsverfahren erfolgen, wie beispielsweise Masse- oder Lösungspolymerisation.

Dabei werden die Monomeren bei Temperaturen von 60 bis 140 °C, vorzugsweise 80 bis 120 °C, in Gegenwart von Radikalbildnern und gegebenenfalls Molekulargewichtsreglern copolymerisiert.

Die Herstellung der Copolymerisate erfolgt vorzugsweise in inerten Lösungsmitteln. Geeignete Lösungsmittel sind beispielsweise Aromaten wie Benzol, Toluol, Xylol, Ester wie Ethylacetat, Butylacetat, Hexylacetat, Heptylacetat, Methylglykolacetat, Ethylglykolacetat, Methoxypropylacetat, Ether wie Tetrahydrofuran, Dioxan, Diethylenglykoldimethylether, Ketone wie Aceton, Methylethylketon, Methylisobutylketon, Methyl-n-amylketon, Methylisoamylketon oder beliebige Gemische derartiger Lösungsmittel.

Die Herstellung der Copolymerisate kann kontinuierlich oder diskontinuierlich erfolgen. Üblicherweise wird in einen Polymerisationsreaktor gleichmäßig und kontinuierlich die Monomermischung und der Initiator eindosiert und gleichzeitig die entsprechende Menge Polymerisat kontinuierlich abgeführt. Vorzugsweise können so chemisch nahezu einheitliche Copolymere hergestellt werden. Chemisch nahezu einheitliche Copolymere können auch hergestellt werden, indem man die Reaktionsmischung mit konstanter Geschwindigkeit in einen Rührkessel einlaufen läßt, ohne das Polymerisat abzuführen.

Man kann auch einen Teil der Monomeren beispielsweise in Lösungsmitteln der genannten Art vorlegen und die restlichen Monomeren und Hilfsmittel getrennt oder gemeinsam in diese Vorlage bei der Reaktionstemperatur eintragen.

Im allgemeinen erfolgt die Polymerisation unter Atmosphärendruck, kann jedoch auch bei Drücken bis zu 20 bar durchgeführt werden. Die Initiatoren werden in Mengen von 0,05 bis 15 Gew.-%, bezogen auf die Gesamtmenge der Monomeren, eingesetzt.

Geeignete Initiatoren sind übliche Radikalstarter wie z.B. aliphatische Azoverbindungen wie Azodiisobuttersäurenitril, Azo-bis-2-methylvaleronitril, 1,1'-Azo-bis-1-cyclohexannitril und 2,2'-Azo-bis-isobuttersäurealkylester; symmetrische Diacylperoxide, wie z.B. Acetyl-, Propionyl- oder Butyrylperoxid, mit Brom-, Nitro-, Methyl- oder Methoxygruppen substituierte Benzoylperoxide, Laurylperoxide; symmetrische Peroxydicarbonate, z.B. Diethyl-, Diisopropyl-, Dicyclohexyl- sowie Dibenzoylperoxydicarbonat; tert.-Butylperoxy-2-ethylhexanoat oder tert.-Butylperbenzoat; Hydroperoxide wie beispielsweise tert.-Butylhydroperoxid, Cumolhydroperoxid; Dialkylperoxide wie Dicumylperoxid; tert.-Butyl-cumylperoxid oder Di-tert.-butylperoxid.

Zur Regelung des Molekulargewichtes der Copolymerisate können übliche Regler bei der Herstellung eingesetzt werden. Beispielhaft genannt seien tert.-Dodecylmercaptan, n-Dodecylmercaptan oder Diisopropylxanthogendisulfid. Die Regler können in Mengen von 0,1 bis 10 Gew.-%, bezogen auf die Gesamtmenge der Monomeren, zugegeben werden.

Die bei der Copolymerisation anfallenden Lösungen der Copolymerisate können dann ohne weitere Aufarbeitung dem Ausdampfungs- bzw. Entgasungsprozeß zugeführt werden, bei dem das Lösungsmittel entfernt und die erfindungsgemäß zu verwendenden Copolymerisate gewonnen werden.

Bei den so hergestellten, erfindungsgemäß zu verwendenden Copolymerisaten handelt es sich um Polyacrylatfestharze des bereits eingangs erwähnten Molekulargewichts und des bereits eingangs erwähnten Gehalts an Hydroxyl- und Säureanhydridgruppen. Die Harze stellen bei Raumtemperatur bzw. leicht erhöhter, jedoch noch unterhalb der genannten Erweichungstemperatur lagerstabile Festharze dar, die zur Herstellung von Pulverlackbindemitteln geeignet sind. Dies bedeutet, daß die erfindungsgemäß zu verwendenden Copolymerisate bei Temperaturen von oberhalb 150, vorzugsweise von oberhalb 120 °C zu einwandfreien Lackfilmen verlaufen und bei Temperaturen von 150 bis 220 °C, vorzugsweise von 150 bis 200 °C zu hochwertigen vernetzten Filmen ausgehärtet werden können. Die erfindungsgemäß zu verwendenden Copolymerisate können daher ohne Zugabe weiterer Komponenten als Pulverlackbindemittel eingesetzt werden.

Es besteht jedoch zusätzlich noch die Möglichkeit der Zugabe von Katalysatoren, die die Vernetzungsreaktion zwischen Hydroxyl- und Carbonsäureanhydridgruppen beschleunigen und dadurch die Einbrennzeit und/oder die Einbrenntemperatur reduzieren.

Solche Katalysatoren sind z.B. tert. Aminogruppen aufweisende Verbindungen wie z.B. 1-N,N-Dimethylamino-3-formylpropan, N,N-Dimethyl-benzylamin, 1,4-Diazabicyclo-(2.2.2)octan, 1,8-Diazabicyclo-(5.4.0)-undec-7-en, 1,5-Diazabicyclo(4.3.0)non-5-en, 1,2-Dimorpholinoethan und 1,3,4-Tricyclohexylhexahydro-1,3,5-triazin; Salze, basierend auf tert.-Aminogruppen und quartären Ammoniumgruppen enthaltenden Verbindungen wie z.B. (2-Hydroxyethyl)trimethylammoniumchlorid, Triethylaminhydrochlorid, Tetrabutylammoniumchlorid, Tetraethylammoniumbromid, Tetrahexylammoniumchlorid und Tetramethylammoniumchlorid; organische Zinnverbindungen wie z.B. Zinndioctoat, Dibutylzinndilaurat, Dibutylzinndiacetat und Dibutylzinndichlorid oder organische Phosphorverbindungen, wie z.B. Triphenylphosphin.

Tert. Amine stellen neben den beispielhaft genannten Zinn- und Phosphorverbindungen die bevorzugten Katalysatoren dar. Die Katalysatoren werden im allgemeinem, falls überhaupt, in Mengen von bis zu 0,1, vorzugsweise von bis zu 0,05 Gew.-%, bezogen auf das Gewicht der Copolymerisate, eingesetzt.

Zur Herstellung der gebrauchsfertigen pulverförmigen Überzugsmittel werden die erfindungsgemäß zu verwendenden, lösungsmittelfreien Copolymerisate gegebenenfalls mit Pigmenten wie z.B. Titandioxid, Verlaufsmittel wie z.B. Siliconverbindungen, Katalysatoren wie z.B. solche der oben beispielhaft genannten Art versehen und z.B. in Extrudern oder Knetern bei Temperaturen von vorzugsweise 100 bis 120 °C in der Schmelze homogenisiert. Der erstarrte Feststoff wird gemahlen und durch Sieben von Kornanteilen oberhalb der gewünschten Korngröße, beispielsweise oberhalb 0,1 mm befreit.

Die so hergestellten pulverförmigen Überzugsmittel können nach üblichen Pulverauftragsverfahren wie z.B. elektrostatischem Pulversprühen oder Wirbelsintern, auf die zu überziehenden hitzeresistenten Substrate aufgebracht werden. Die Härtung der Überzüge kann durch Erhitzen auf Temperaturen von 150 bis 220 °C, vorzugsweise 150 bis 200 °C erfolgen. Man erhält dabei harte, glänzende, lösungsmittelfeste Überzüge mit hervorragenden Korrosionsschutzeigenschaften und einer guten Wärmeformstabilität. Erfindungsgemäß können beliebige hitzeresistente Substrate wie z.B. solche aus Metall oder Glas beschichtet werden.

Die in den nachfolgenden Beispielen genannten Teile und Prozente sind, sofern nicht anders angegeben, Gewichtsteile bzw. Gewichtsprozente.

I. Allgemeine Herstellungsvorschrift für die Hydroxyl- und Anhydridgruppen enthaltenden Copolymerisate $A_1$ bis $A_8$

In einem 25 l-Edelstahldruckreaktor mit Rühr-, Kühl- und Heizvorrichtungen wird Teil I vorgelegt und auf Reaktionstemperatur aufgeheizt. Dann werden parallel Teil II (Zugabe über einen Zeitraum von insgesamt 3 Stunden) und Teil III (Zugabe über einen Zeitraum von insgesamt 3,5 Stunden) zudosiert. Anschließend wird 1 Stunde bei der angegebenen Temperatur nachgerührt.

Die erhaltenen Polymerlösungen werden in einem handelsüblichen Ausdampfextruder bei einer Temperatur von ca. 150 °C, einer Verweilzeit von ca. 2 Minuten und einem Vakuum von ca. 266 mbar (200 Torr) vollständig vom Lösungsmittel befreit, anschließend abgekühlt und granuliert.

Die Reaktionstemperaturen und die Zusammensetzung der Teile I bis III sind in Tabelle I, zusammen mit den Kenndaten der erhaltenen Copolymerisate aufgeführt.

Tabelle I (Mengenangaben in g)

| Copolymerisate | $A_1$ | $A_2$ | $A_3$ | $A_4$ | $A_5$ | $A_6$ | $A_7$ | $A_8$ |
|---|---|---|---|---|---|---|---|---|
| Teil I | | | | | | | | |
| Toluol | 8000 | 8000 | 8000 | 8000 | 8000 | 8000 | 8000 | 8000 |
| Teil II | | | | | | | | |
| Methylmethacrylat | 4290 | 3718 | 4592 | 3118 | 3118 | 2974 | 3440 | 3764 |
| Butylmethacrylat | 2688 | - | 3024 | 3764 | - | 2150 | 3440 | 3118 |
| 2-Ethylhexylmethacrylat | - | 3136 | - | - | - | - | - | - |
| Butylacrylat | - | - | - | - | 3764 | 1613 | - | - |
| Styrol | 1742 | 1680 | 1344 | 1612 | 1612 | 1613 | 1614 | 1612 |
| Hydroxyethylmethacrylat | 1162 | 1266 | 1064 | 1290 | 1290 | - | 1290 | 1290 |
| Hydroxypropylmethacrylat | - | - | - | - | - | 1434 | - | - |
| Maleinsäureanhydrid | 870 | 952 | 728 | 968 | 968 | 968 | 968 | 968 |
| Teil III | | | | | | | | |
| tert.-Butylperoxy-2-ethylhexanoat (70 %ig) | 640 | 640 | 640 | 640 | 640 | 640 | 640 | 640 |
| Toluol | 608 | 608 | 608 | 608 | 608 | 608 | 608 | 608 |
| Polymerisationstemperatur (°C) | 110 | 110 | 110 | 110 | 110 | 110 | 110 | 110 |
| Temperatur der Nachrührphase (°C) | 90 | 90 | 90 | 90 | 90 | 90 | 90 | 90 |
| Festgehalt (%) | 55,2 | 55,4 | 55,5 | 55,1 | 55,6 | 55,0 | 55,5 | 55,0 |
| Viskosität (23°C,mPa.s) | 15670 | 18490 | 21340 | 12883 | 3766 | 3849 | 13897 | 16023 |
| Erweichungspunkt des Festharzes (DTA, °C) | 71,6 | 60,4 | 53,5 | 59,4 | 40,8 | 56,5 | 60,9 | 62,2 |

II. Herstellung der erfindungsgemäßen Pulverlackbeschichtungsmittel

60 Gew.-Teile Copolymerisat $A_1$ bis $A_8$ werden jeweils mit 40 Gew.-Teilen eines handelsüblichen Titandioxidpigments und gegebenenfalls den in nachstehender Tabelle II genannten Katalysatoren in einem

Extruder bei ca. 120 °C aufgeschmolzen und homogenisiert. Nach dem Erstarren der Schmelze wird das Produkt bei 20 °C gemahlen, mittels Sieben von Anteilen einer Korngröße von über 90 µm befreit und mittels einer elektrostatischen Sprüheinrichtung auf Prüfbleche appliziert und 15 Minuten bei 180 °C ausgehärtet.

Die Lösungsmittelfestigkeit wird durch einen Wichtest mit einem Aceton-getränkten Wattebausch geprüft. Angegeben wird die Anzahl der Doppelhübe, nach denen der Lackfilm ohne sichtbare Veränderung bleibt. Mehr als 50 Doppelhübe pro Film wurden nicht durchgeführt (Einzelheiten siehe Tabelle II).

Tabelle II Formulierungen der erfindungsgemäßen Pulverbeschichtungsmittel, Angaben in Gew.-%

| Verwendungsbeispiel | 1 | 2 | 3 | 4 | 5 | 6 | 7 | 8 | 9 | 10 | 11 | 12 |
|---|---|---|---|---|---|---|---|---|---|---|---|---|
| Copolymerisat | 59,4 $A_1$ | 58,8 $A_1$ | 60,0 $A_1$ | 60,0 $A_2$ | 60,0 $A_3$ | 59,7 $A_4$ | 60,0 $A_5$ | 59,7 $A_6$ | 59,9 $A_6$ | 59,9 $A_7$ | 59,9 $A_7$ | 59,9 $A_8$ |
| Dimorpholinoethan | 0,6 | 1,2 | | | | | | | | | | |
| Zinndioctoat | | | | | | 0,3 | | | | | | |
| 1-N,N-Dimethylamino-3-formylpropan | | | | | | | | | | | 0,1 | 0,1 |
| Triethylamin | | | | | | | | | 0,1 | | | |
| Triphenylphosphin | | | | | | | | 0,3 | | | | |
| Benzyl-N-dimethylamin | | | | | | | | | | 0,1 | | |
| Titandioxid | 40,0 | 40,0 | 40,0 | 40,0 | 40,0 | 40,0 | 40,0 | 40,0 | 40,0 | 40,0 | 40,0 | 40,0 |
| Acetonwischtest (Anzahl der Doppelhübe) | 50 | 50 | 30 | 50 | 25 | 48 | 44 | 46 | 50 | 50 | 50 | 50 |

## Patentansprüche

1. Verwendung von pulverförmigen Copolymerisaten olefinisch ungesättigter Verbindungen mit einem Erweichungspunkt oder - bereich innerhalb des Bereichs von 30 bis 150 ° C, einem als Gewichtsmittel

bestimmten Molekulargewicht von 1500 bis 75 000, einem Gehalt an freien Hydroxylgruppen von 0,2 bis 6,0 Gew.-% und einem Gehalt an intramolekularen Carbonsäureanhydridgruppen (berechnet als $C_4H_2O_3$) von 1 bis 30 Gew.-% als Bindemittel oder Bindemittelkomponente in Pulverlacken.

**2.** Verwendung gemäß Anspruch 1, dadurch gekennzeichnet, daß die Copolymerisate in Kombination mit Katalysatoren für die Reaktion zwischen Anhydrid- und Hydroxylgruppen zum Einsatz gelangen.

**3.** Verwendung gemäß Anspruch 2, dadurch gekennzeichnet, daß als Katalysatoren tertiäre Amine verwendet werden.

**4.** Verwendung gemäß Anspruch 2, dadurch gekennzeichnet, daß als Katalysatoren organische Zinn- oder Phosphorverbindungen verwendet werden.

**Claims**

**1.** Use of powdery copolymers of olefinically unsaturated compounds with a softening point or range within the range of 30 to 150 °C, with a weight-average molecular weight of 1500 to 75,000, a content of free hydroxyl groups of 0.2 to 6.0 weight % and a content of intramolecular carboxylic acid anhydride groups (calculated as $C_4H_2O_3$) of 1 to 30 weight % as binder or binder component in powder coatings.

**2.** Use according to claim 1, characterised in that the copolymers are used in combination with catalysts for the reaction between anhydride and hydroxyl groups.

**3.** Use according to claim 2, characterised in that tertiary amines are used as catalysts.

**4.** Use according to claim 2, characterised in that organic compounds of tin or of phosphorous are used as catalysts.

**Revendications**

**1.** Utilisation de copolymères pulvérulents de composés à insaturation oléfinique, ayant un point ou intervalle de ramollissement à l'intérieur de l'intervalle de 30 à 150 °C, à un poids moléculaire, déterminé en moyenne en poids, de 1500 à 75000, une teneur en groupes hydroxy libres de 0,2 à 6,0 % en poids et une teneur en groupes anhydride d'acide carboxylique intramoléculaires (exprimée en $C_4H_2O_3$) de 1 à 30 % en poids, en tant que liant ou composant de liant dans des vernis en poudre.

**2.** Utilisation selon la revendication 1, caractérisée en ce que les copolymères sont utilisés en combinaison avec des catalyseurs de la réaction entre les groupes anhydride et les groupes hydroxy.

**3.** Utilisation selon la revendication 2, caractérisée en ce que les catalyseurs utilisés sont des amines tertiaires.

**4.** Utilisation selon la revendication 2, caractérisée en ce que les catalyseurs utilisés sont des composés organiques de l'étain ou du phosphore.